# FASCICULE DE BREVET EUROPEEN

(11) **EP 0 574 295 B1**
(45) Date de publication et mention de la délivrance du brevet: **09.10.1996**
(21) Numéro de dépôt: 93401447.3
(22) Date de dépôt: 08.06.1993
(51) Int. Cl.: G01V 1/40, G01V 1/20

(54) **Système sismique mobile de grande longueur pour puits**
Sehr lange,bewegbare seismische Anordnung für ein Bohrloch
Very long mobile seismic system for borehole

(30) Priorité: 12.06.1992 FR 9207068
(43) Date de publication de la demande: 15.12.1993
(73) Titulaire: INSTITUT FRANCAIS DU PETROLE, F-92502 Rueil-Malmaison (FR)
(72) Inventeur: Laurent, Jean, F-78630 Orgeval (FR); Meynier, Patrick, F-78400 Chatou (FR); Cretin, Jacques, F-78150 Le Chesnay (FR); Beauducel, Claude, F-60119 Henonville (FR)

(56) Documents cités:
- EP-A- 0 457 644
- WO-A-91/13233
- WO-A-93/08485
- FR-A- 2 501 380
- FR-A- 2 636 741
- GB-A- 2 230 091
- US-A- 4 897 646

## Description

L'invention concerne un système sismique adapté à être descendu dans un puits pour la réception d'ondes acoustiques ou sismiques et plus particulièrement un système sismique pour puits pourvu d'un nombre relativement important de capteurs répartis sur une longueur importante.

Les systèmes adaptés notamment à la réception d'ondes acoustiques ou sismiques pour puits comportent généralement une ou plusieurs unités de réception reliées les unes aux autres, descendues dans un puits à l'extrémité d'un câble électro-porteur multi-conducteurs relié à une installation de surface. Chacune des unités de réception comporte une enceinte étanche associée à des moyens d'ancrage permettant de l'appliquer contre une portion de la paroi du puits et de coupler avec les formations géologiques environnantes un ou plusieurs géophones éventuellement tri-axiaux. Les différents capteurs peuvent être connectés individuellement à l'installation de surface pour transmettre les signaux qu'ils captent. Plus fréquemment, ils sont connectés à un appareil d'acquisition de signaux installé dans l'unité de réception en tête du système de réception. Cet appareil collecte par multiplexage, numérise et mémorise les signaux issus de tous les capteurs du système de réception, avant de les transmettre sous une forme codée à un ensemble de commande et d'enregistrement en surface.

De tels systèmes de réception sont décrits par exemple dans les brevets FR 2.501.380, 2.561.394, 2.564.599, 2.613.496, 2.616.230 ou 2.636.741 déposés par le demandeur et US-A-5 062 084.

Avec ces systèmes sismiques, on met en oeuvre des méthodes de prospection sismique où l'on capte simultanément en un nombre limité de profondeurs des signaux sismiques renvoyés par les discontinuités du sous-sol exploré en réponse à l'émission d'ébranlements dans celui-ci au moyen d'une source disposée à la surface, dans un autre puits ou dans le même puits et où l'on déplace le système successivement en un nombre important de profondeurs le long du puits, de façon à multiplier pour chaque capteur le nombre d'emplacements de réception.

Les dispositifs précédents peuvent donner des résultats satisfaisants à condition que le puits parcouru par l'ensemble de sondes employé soit disponible suffisamment longtemps pour effectuer des cycles d'émission-réception sismiques à tous les emplacements successifs choisis et ainsi compenser le faible nombre de capteurs. Ceci est très pénalisant dans les puits à disponibilité réduite tels que les puits de production.

Le système sismique selon l'invention est adapté à l'acquisition dans des puits d'un volume de données important et ceci durant des périodes relativement courtes de façon à minimiser le temps d'indisponibilité des puits pour la production.

Il est caractérisé en ce qu'il comporte en combinaison un élément allongé délimité sur une partie au moins de sa longueur, par une paroi transparente aux ondes acoustiques (telle qu'une gaîne souple), cette partie étant remplie de liquide, des moyens d'ancrage de l'élément allongé dans le puits tels que des bras ou patins d'ancrage par exemple, au moins un géophone disposé dans l'élément allongé de façon à être couplé avec les formations environnant le puits par action sur les moyens mobiles d'ancrage, un et de préférence plusieurs hydrophones disposés dans chacune des parties de l'élément allongé pourvues d'une paroi transparente aux ondes acoustiques, un câble électro-porteur pour relier l'élément allongé à une station de commande et d'enregistrement en surface, des moyens moteurs pour actionner les moyens mobiles d'ancrage et un ensemble électronique pour l'acquisition, la mémorisation et la transmission des signaux reçus par chaque hydrophone et chaque géophone de l'élément allongé, pour contrôler les moyens moteurs et gérer les communications avec ladite station de commande et d'enregistrement en surface.

L'élément allongé peut comporter des moyens d'ancrage disposés à des endroits différents le long de l'élément allongé et actionnés par des moyens moteurs soit communs, soit séparés, disposés par exemple dans une ou plusieurs parties rigides de l'élément allongé.

Le système sismique selon l'invention peut comporter plusieurs sections raccordées bout à bout ou plusieurs parties réunies par des moyens de liaison tels que des conducteurs électriques et éventuellement une ou plusieurs canalisations hydrauliques.

Les moyens moteurs comportent par exemple un ensemble hydraulique entrainé par un moteur électrique et des conducteurs électriques pour connecter le moteur au câble électro-porteur.

Les moyens moteurs peuvent encore comporter plusieurs ensembles hydrauliques autonomes entrainés séparément chacun par un moteur électrique connecté au câble électro-porteur.

L'ensemble hydraulique quand il est unique est disposé par exemple vers l'extrémité de l'élément allongé opposée au câble électro-porteur, de façon à lester le système de réception.

L'ensemble électronique d'acquisition, de contrôle, de gestion et de transmission peut comporter plusieurs unités électroniques disposés dans différentes sections du système de réception.

Suivant un mode de réalisation le système sismique selon l'invention comporte au moins une section comprenant deux parties allongées remplies de liquide délimitées extérieurement par une paroi souple et renfermant chacune un groupe d'hydrophones disposés à distance les uns des autres, les deux parties étant raccordées l'une à l'autre par une partie tubulaire contenant une unité électronique locale d'acquisition.

Le système sismique comporte par exemple plusieurs sections pourvues chacune d'embouts et adaptées à se raccorder les unes aux autres par emboitement, chacune d'elles étant traversée suivant sa longueur par une pluralité de lignes électriques, et des moyens de connexion électrique pour le raccordement électrique des lignes des différentes sections les unes aux autres.

Chaque section d'une partie au moins des différentes sections de l'élément allongé peut aussi être traversée par une canalisation hydraulique, les embouts étant pourvus de moyens de fermeture escamotables pour mettre en comunication automatiquement les canalisations hydrauliques respectives de sections adjacentes au moment de leur emboitement.

Le système sismique peut comporter également une ou plusieurs sections contenant des moyens d'émission de signaux acoustiques ou sismiques.

Par interconnexion de plusieurs sections contenant chacune plusieurs hydrophones et/ou géophones, on peut constituer un ensemble sismique mobile ou flûte de puits de grande longueur pouvant contenir par exemple 100 niveaux de réception et plus répartis sur une zone de profondeur importante et donc réaliser des opérations de prospection sismique à échelle relativement grande dans des puits bien plus rapidement qu'avec les dispositifs antérieurs à nombre limité d'emplacements de réception.

D'autres caractéristiques et avantages du système sismique selon l'invention apparaîtront mieux à la lecture de la description ci-après de modes de réalisation décrits à titre d'exemples non limitatifs, en se référant aux dessins annexés où :
- la Fig.1 montre schématiquement le système de réception positionné dans un puits;
- la Fig.2 montre schématiquement un mode de réalisation d'une section de réception contenant des hydrophones et un module électronique d'acquisition;
- la Fig.3 montre schématiquement un premier mode de réalisation d'une section de réception et d'ancrage autonome;
- la Fig.4 montre schématiquement une deuxième mode de réalisation d'une section de réception et d'ancrage dépendante;
- la Fig.5 montre schématiquement une section terminale contenant un ensemble hydraulique commun;
- la Fig.6 montre en coupe longitudinale une zone d'emboitement de deux sections successives du système de réception;
- la Fig.7 montre en coupe transversale la disposition des lignes électriques et hydrauliques dans une zone de raccordement de deux sections;
- les Fig.8 et 8A montrent schématiquement la disposition de différents éléments à l'intérieur d'une section de réception et d'acquisition;
- les Fig.9 et 10 montrent deux agencements du système de réception convenant pour les modes de réalisation pourvus d'un petit nombre de sections d'ancrage; et
- les Fig.11 et 12 montrent deux autres agencements convenant pour des modes de réalisation employant un nombre relativement important de sections d'ancrage.

Le système de réception 1 selon l'invention est adapté à être descendu dans un puits ou forage 2 suspendu à un câble électro-porteur 3. Des moyens de manoeuvre 4 en surface coopèrent avec le câble 3 pour faire descendre et remonter le système de réception à volonté. Le câble électro-porteur 3 d'un type connu comporte une pluralité de lignes conductrices (7 par exemple) connectées à un ensemble mobile de commande et d'enregistrement 5. Le système de réception comporte généralement plusieurs sections interconnectées les unes aux autres comme décrit ci-après.

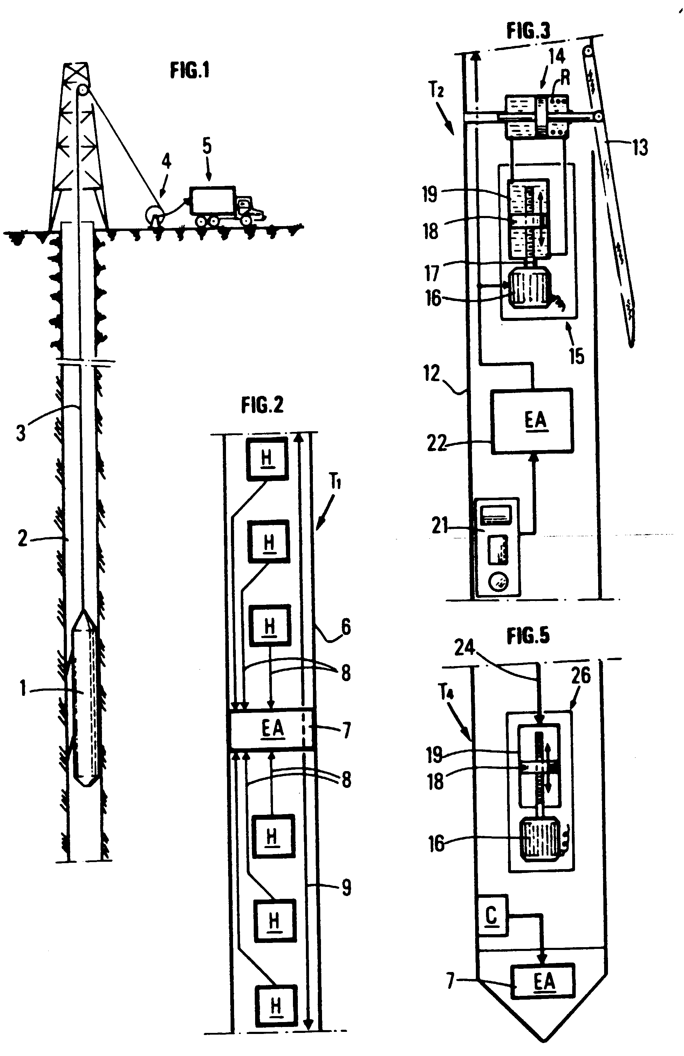

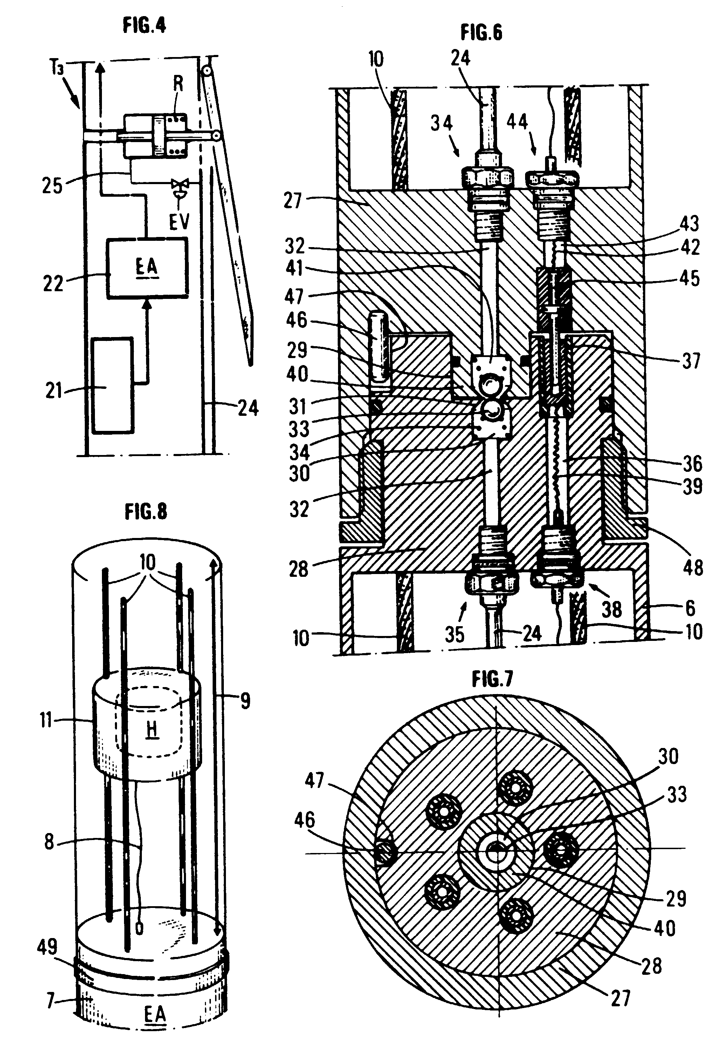

La section de réception et d'acquisition T1 schématisée à la Fig.2 comporte une gaîne souple 6 transparente aux ondes acoustiques, dont la longueur peut varier selon les applications, de quelques mètres à quelques dizaines de mètres. Vers le milieu de la section T1 est disposé une unité électronique d'acquisition de signaux 7. A l'intérieur et régulièrement espacés le long de la gaîne (6), sont disposés des hydrophones H tous reliés par des conducteurs électriques 8 à l'unité d'acquisition 7 de la section T1 Des moyens de liaison électriques ou électro-hydrauliques 9 qui seront définis en relation avec les Fig.6 à 12, courent tout le long des sections T1.

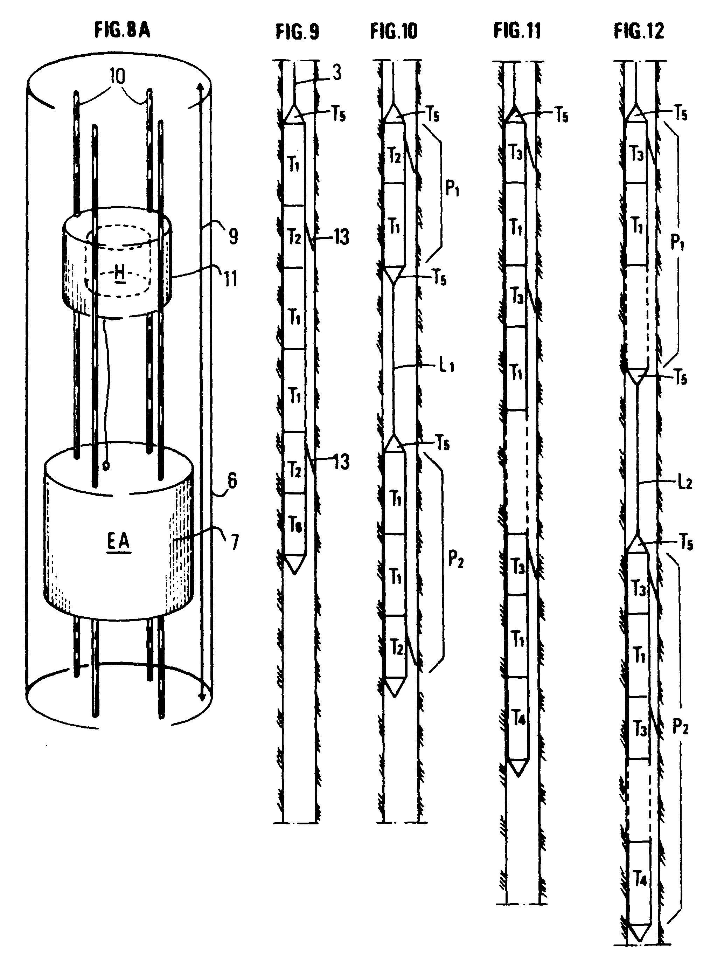

Plusieurs câbles 10 (Fig.8, 8A) courent tout le long de chaque section T1 pour supporter les efforts mécaniques. Les boîtiers 11 des hydrophones H sont fixés à ces câbles 10 à distance les uns des autres. Suivant le mode de réalisation de la Fig.8, l'unité électronique locale 7 est dans un boîtier 7A fixé à la gaine extérieure par des colliers 7B. Elle établit une séparation étanche entre les deux parties de la section de part et d'autre et les câbles 10 de ces deux parties sont fixés à lui. Des passages étanches ménagés au travers du boîtier de l'unité 7 permettent le passage d'un côté à l'autre de la section de l'ensemble 9 de conducteurs électriques et/ou de canalisations hydrauliques.

Suivant le mode de réalisation de la Fig.8A, la section transversale du boîtier 7A de l'unité électronique 7 est inférieure à celle de la gaine extérieure 6. Les deux parties de la section de part et d'autre du boîtier communiquent. Le boîtier 7 est fixé aux câbles de traction 10 et l'ensemble de liaison 9 (fils électriques et canalisations) passe dans l'espace annulaire entre lui et la gaine extérieure 6.

Les sections T1 ainsi constituées sont remplies d'un liquide tel que de l'huile isolante.

La section autonome de réception et d'ancrage T2 schématisée à la Fig.3, comporte un corps rigide 12 et un bras mobile 13 pouvant pivoter sous l'action d'un vérin 14 entre une position de retrait contre le corps et une position d'écartement où il vient s'ancrer contre la paroi du puits. Le vérin est mû par application d'un fluide hydraulique produit par un ensemble hydraulique local 15 tel que celui décrit dans le brevet FR 2 501 380. Cet ensemble comporte par exemple un moteur électrique 16 entraînant une vis sans fin 17 et un piston 18 déplacé dans un cylindre 19 rempli d'huile par la rotation de la vis 17, et des canalisations 20 reliant le cylindre 19 à celui du vérin 14. Dans le corps 12 de la section T2, on dispose une unité électronique locale 22 analogue à l'unité d'acquisition 7 mais adaptée à commander en outre l'activation des moyens d'ancrage et notamment du moteur électrique. Dans le corps 12, on peut installer aussi un ou plusieurs géophones 21, par exemple un géophone tri-axial, l'unité électronique locale 22 comporte aussi dans ce cas des circuits pour l'acquisition, la mémorisation et la transmission de signaux captés.

La section dépendante de réception et d'ancrage T3 schématisée à la Fig.4 est analogue à la précédente sauf qu'elle ne comporte pas d'ensemble hydraulique local tel que l'ensemble 15 précédent, le cylindre du vérin étant ici relié par une dérivation 25A à une canalisation 24 courant tout le long de la section (Fig. 6) et reliée par exemple à un système hydraulique général 25 qui est constitué de façon analogue au système hydraulique 15. Une électro-vanne EV peut être rajoutée sur la canalisation 25A de façon à pouvoir commander sélectivement l'ouverture du bras d'ancrage dans le cas où il y en a plusieurs disposés le long de l'élément allongé. L'électro-vanne EV est commandée par l'intermédiaire de l'unité électronique locale 22.

Chaque système hydraulique comporte de préférence des moyens automatiques de compensation des variations de la pression statique régnant dans le puits comme décrits par exemple dans le brevet FR 2 501 380 précité.

Le système hydraulique général 26 est disposé par exemple (Fig.5) dans une section terminale T4 du système de réception 1 de façon à faciliter par sa masse la progression vers le bas du système de réception. Dans cette section terminale T4, on dispose aussi de préférence au moins un capteur de mouvement C tel qu'un accéléromètre de type sismique ou un géophone, avec une unité électronique d'acquisition 7 dans le but de détecter toute anomalie de la progression du système de réception le long du puits, suite à un coincement par exemple, comme décrit dans le brevet FR 2 613 496 précité.

On peut utiliser aussi une section terminale T5 contenant un lest destiné à faciliter la progression du système sismique le long du puits. Cette section T5 peut être purement passive mais on peut aussi y placer un accéléromètre du type sismique ou un géophone associé à une unité électronique 7 comme indiqué ci-dessus.

Une ou éventuellement plusieurs sections du système sismique selon l'invention peut contenir aussi une source sismique d'un type quelconque et par exemple un vibrateur tel que décrit par exemple dans la demande de brevet FR 90/12472 ou le brevet FR 2 656110 déposés par le demandeur. A cette source sismique, on associe alors un module électronique local de commande 22.

L'interconnexion des sections successives du système de réception est effectuée suivant le mode de réalisation de la Fig.6 par exemple. Chaque section T1, T2, T3 ou T4 comporte à son extrémité inférieure un manchon de raccordement 27 et à son extrémité opposée un embout mâle 28 adapté à s'emboiter dans le manchon correspondant 27 d'une section adjacente. Une cavité cylindrique 29 est ménagée dans la paroi terminale de chaque embout mâle 28 et suivant son axe. Dans le prolongement de cette cavité 29, se trouve une chambre 30 communiquant avec la cavité 29 par une ouverture tronconique 31, cette chambre communiquant avec l'intérieur de la section par un alésage 32. L'ouverture tronconique 31 sert de siège à une bille 33 placée dans la chambre 30. Un ressort 34 la maintient plaquée contre son siège. A l'extrémité intérieure de l'alésage 32, est vissé un embout fileté 35 solidaire de la canalisation 24 qui traverse la section sur toute sa longueur. La paroi terminale de l'embout 28 est traversée de part en part par plusieurs canaux 36 disposés en couronne (Fig.7) autour de la cavité centrale 29 et parallèlement à son axe. Ces canaux sont fermés à leur extrémité extérieure par une fiche électrique 37 ou selon les cas un connecteur mâle multi-broches, et sont isolés de l'intérieur de la section à leur extrémité opposée, par des moyens d'étanchéité 38 du type permettant le passage étanche d'un ou de plusieurs fils électriques 39 ou traversées étanches.

Chaque manchon de raccordement 27 comporte un prolongement cylindrique axial 40 pourvu dans sa partie centrale d'une chambre 41 analogue à la chambre 30 et communiquant comme elle avec l'extérieur par une ouverture tronconique 31 formant siège pour une bille 33 associée à un ressort 34. La paroi au fond du manchon de raccordement 27 est traversée également de part en part par une pluralité de canaux 42 pour le passage d'un ou de plusieurs fils électriques 43. Ces fils pénètrent à l'intérieur de la section pareillement par des traversées étanches 44 et sont reliés à une prise 45 ou un connecteur multi-prises selon le cas. Les différentes fiches et prises des sections adjacentes sont disposées de façon à venir se connecter les unes aux autres quand on réalise leur emboitement. Une clavette d'indexation 46 est fixée au fond du manchon et l'embout est pourvu d'un évidement 47 permettant un positionnement angulaire correct de ces deux éléments durant leur emboitement et en conséquence une connexion correcte des différentes lignes conductrices 39, 43. De la même façon, la chambre 41 au fond du manchon 27 est prolongée également par un canal 32 auquel on peut raccorder comme indiqué précédememnt une canalisation 24 au moyen d'un embout fileté 34.

Les câbles 10 (Fig.8) sont fixés aux parois intérieures de manchon 27 et de l'embout 28. Une bague 48 filetée extérieurement et solidaire en translation de l'embout mâle 28, est adaptée à venir se visser dans une partie filetée intérieure du manchon 27 en translatant l'embout 28 vers sa position d'emboitement total dans celui-ci. Dans cette position, les billes 33 de l'embout 28 et du manchon 27 sont en face l'une de l'autre et leurs sièges sont conformés pour qu'elles saillent à l'extérieur des deux chambres 30. Quand on réalise la connexion des sections par conséquent, les billes 33 se repoussent et mettent en communication l'une avec l'autre les chambres 30 en regard. De cette façon, on peut par emboitement de sections, mettre les sections d'ancrage dépendantes telles que T3 en communication par la canalisation commune 24 et par là avec le système hydraulique général 25 dans une section telle que T4 (Fig.5).

Suivant un mode de réalisation simplifié, on peut réaliser des emboitements avec des manchons et des embouts 27, 28 dépourvus de moyens d'intercommunication hydraulique escamotables tels que décrits ci-dessus, quand on dispose par exemple tout le long du système de réception de plusieurs sections possédant des moyens moteurs autonomes telles que les sections T2 (Fig.3).

Suivant un autre mode de réalisation non représenté, on peut utiliser aussi des manchons et des embouts de raccordement comportant un connecteur électrique commun auquel sont connectés tous les conducteurs électriques tels que 39, 43 et un connecteur hydraulique séparé pour les sections de canalisation hydraulique 24.

L'ensemble des conducteurs électriques 38, 42 et dans certains cas la canalisation hydraulique commune 24, constitue les moyens de liaison 9 précédemment définis.

Différentes configurations peuvent être obtenues par interconnexion des différentes types de section précédentes.

Les modes de réalisation des Fig.9 et 10 comportent des sections d'ancrage autonomes de type T2. Le système de réception est réalisé par exemple par interconnexion continue d'une ou de plusieurs sections du type T1 (Fig.2) et d'au moins une section autonome d'ancrage telle que T2 (Fig.3), cet ensemble étant fixé à une première extrémité sous une section T5 de liaison solidaire du câble électro-porteur 3 et à son extrémité opposée, à une section terminale T6 pourvue d'un lest.

Suivant le mode de réalisation de la Fig.10, le système de réception est constitué d'au moins deux sous-ensembles, chacun d'eux comportant au moins une section telle que T1. L'un des deux sous-ensembles au moins comporte une section d'ancrage autonome de type T2. Les deux parties du système de réception sont reliées respectivement à des sections de liaison T5 réunies entre elles par un câble électro-porteur L1 analogue au câble électro-porteur 3.

Les modes de réalisation des Fig.11 et 12 conviennent plus particulièrement quand le système de réception comporte un nombre relativement important de sections d'ancrage.

Suivant le mode de réalisation de la Fig.11, on réalise une interconnexion continue de plusieurs sections telles que T1 en intercalant à différents emplacements de sa longueur plusieurs sections d'ancrage dépendantes de type T3, et en connectant l'ensemble à une section de type T4 capable de fournir du fluide hydraulique à toutes les sections d'ancrage dépendantes T3 via la canalisation commune 24. Dans ce cas, on utilise des moyens de connexion intermittents de sections à intercommunication hydraulique tels que par exemple ceux montrés à la Fig.6. La section T4 est de préférence positionnée de façon à lester le système de réception et de faciliter sa progression le long du puits.

Suivant le mode de réalisation de la Fig.12, on réalise un système de réception analogue en deux ou plusieurs sous-ensembles P1, P2 comportant chacun une ou plusieurs sections de type T1 et une ou plusieurs sections de type T3 communiquant hydrauliquement les unes avec les autres, les différents sous-ensembles étant réunies les uns aux autres par l'intermédiaire de câbles électro-hydrauliques L₂ et de sections de couplage de type T5. Les moyens hydrauliques communs sont disposés de préférence également à la base du système de réception ainsi constitué dans une section du type T4.

Suivant un mode de réalisation préféré, les différentes unités électroniques 7 ou 22 disposées dans les différentes sections du système sismique pour contrôler l'acquisition des signaux captés et commander des moyens moteurs où les moyens d'émission sismique sont réunis avec la station de commande et d'enregistrement en surface par un système de transmission du type décrit dans les demande de brevet FR 91/15691 ou 92/03575 déposés par le demandeur. Les unités électroniques 7 ou 22 sont pourvues chacune d'un module de veille adressable, comportant des moyens de décodage de signaux de commande. Tous ces modules de veille sont reliés en permanence à la station centrale par des lignes communes (fils conducteurs ou fibres optiques) du câble électro-porteur et du faisceau de conducteurs 39, 43 courant tout le long de l'élément allongé, les différentes unités électroniques 7, 22 peuvent être connectées sélectivement sur d'autres lignes du faisceau de conducteurs 39, 43 et du câble électro-porteur 3, par l'intermédiaire de moyens de commutation actionnés quand le module de veille qui y est inclus, décode une commande qui lui est adressée depuis la station de commande 5 en surface. Par cette connexion sélective, il peut alors recevoir du courant électrique pour l'alimentation des moyens moteurs ou éventuellement d'une source sismique ou bien transmettre des données acquises et mémorisées vers cette même station 5.

Suivant un autre mode de réalisation, les unités 7, 22 associés aux hydrophones et aux géophones sont par exemple du type décrit dans le brevet FR 2 616 230 précité et comportent des moyens pour numériser et mémoriser les signaux reçus, pour décoder des ordres adressés par la station centrale de commande et d'enregistrement 5 en surface, et en réponse, pour coder les réponses, notamment les données mémorisées, avant de les transmettre vers la surface.

Suivant un autre mode de réalisation, on dispose dans chaque section une unité électronique d'acquisition 7, 22, qui communique avec un module électronique de communication disposé par exemple dans la section T5 en tête du système sismique et non représenté, ce module comportant des moyens de codage pour décoder les ordres reçus par le câble électro-porteur 3 avant leur transfert vers les différentes unités 2 électroniques 7, 22 tout au long du système de réception, et coder les données acquises avant leur transmission sur le même câble électro-porteur 3.

Sous une forme continue (Fig. 9, 11) ou sous une forme discontinue avec plusieurs parties reliées les unes aux autres par des moyens de liaison adaptés (Fig. 10, 12), on peut réaliser ainsi un système sismique de plusieurs dizaines à plusieurs centaines de mètres éventuellement capables de fournir à une station d'enregistrement en surface plusieurs centaines de "traces" différentes. Avec un tel système de réception on peut donc obtenir des relevés sismiques plus précis tout en réduisant sensiblement le temps d'occupation du puits.

On ne sortirait pas du cadre de l'invention en remplaçant les bras d'ancrage par tout autre moyen de couplage, tel que des patins ou des enceintes pouvant être appliquées contre la paroi du puits par dilatation ou en utilisant des électro-aimants pour l'application de l'élément allongé ou des bras d'ancrage contre la paroi du puits cuvelée.

On ne sortirait pas non plus du cadre de l'invention en remplaçant les moyens moteurs électro-hydrauliques d'ancrage décrits par d'autres moyens connus du type électro-mécanique où la rotation d'une vis sans fin telle que 17 agit mécaniquement sur des bras ou des patins d'ancrage.

## Revendications

1. Système sismique mobile pour un puits, comportant en combinaison un élement allongé (1) délimité sur une partie au moins de sa longueur, par une paroi (6) transparente aux ondes acoustiques, cette partie étant remplie de liquide, des moyens d'ancrage de l'élément allongé dans le puits, au moins un géophone (21) disposé dans l'élément allongé de façon à être couplé avec les formations environnant le puits par action sur lesdits moyens d'ancrage, au moins un hydrophone (H) disposé dans chacune desdites parties de l'élément allongé pourvue d'une paroi transparente aux ondes acoustiques, un câble électro-porteur (3) pour relier l'élément allongé à une station de commande et d'enregistrement (5) en surface, des moyens moteurs (14, 15, 26) pour actionner les moyens mobiles d'ancrage et un ensemble électronique (7, 22, 39, 43) pour l'acquisition, la mémorisation et la transmission des signaux reçus par chaque hydrophone et chaque géophone de l'élément allongé, pour contrôler les moyens moteurs et gérer les communications avec ladite station de commande et d'enregistrement (5) en surface.

2. Système sismique selon la revendication 1, caractérisé en ce que l'élément allongé comporte des moyens d'ancrage (13) disposés à des endroits différents le long de l'élément allongé (1).

3. Système sismique selon la revendication 1 ou 2, caractérisé en ce que l'élément allongé comporte au moins une partie rigide (12) contenant les moyens d'ancrage.

4. Système sismique selon la revendication 1 ou 2 ou 3, caractérisé en ce que les moyens d'ancrage comportent plusieurs éléments d'ancrage escamotables (13) et des moyens moteurs (24, 26) communs pour déplacer les éléments d'ancrage.

5. Système sismique selon la revendication 1 ou 2 ou 3, caractérisé en ce que les moyens d'ancrage comportent plusieurs éléments d'ancrage escamotables (13) et des moyens moteurs comportant plusieurs unités (15) distinctes pour déplacer les éléments d'ancrage.

6. Système sismique selon l'une de revendications précédentes, caractérisé en ce que l'élément allongé comporte au moins deux sections (T1, T2) raccordées bout à bout.

7. Système de réception selon l'une de revendications 1 à 5, caractérisé en ce que l'élément allongé comporte au moins deux parties distinctes (T1, T2, T3) reliées l'une à l'autre par des moyens de liaison (L₁, L₂).

8. Système sismique selon la revendication précédente, caractérisé en ce que les moyens de liaison (L₁) comportent des conducteurs électriques.

9. Système sismique selon la revendication 7 ou 8, caractérisé en ce que les moyens de liaison (L₂) comportent au moins une canalisation hydraulique.

10. Système sismique selon la revendication 4 ou 5, caractérisé en ce que les moyens moteurs comportent au moins un ensemble hydraulique (18, 19) associé à un moteur électrique (16) et des conducteurs électriques pour connecter le moteur électrique au câble électro-porteur (3).

11. Système sismique selon la revendication précédente, caractérisé en ce que ledit ensemble hydraulique est dans une section (T4) disposée vers l'extrémité de l'élément allongé opposée audit câble, de façon à lester le système de réception.

12. Système sismique selon l'une des revendications précédentes, caractérisé en ce que chaque partie de l'élément allongé (1) pourvue d'une paroi transparente aux ondes acoustiques est délimitée extérieurement par une gaine souple (6).

13. Système sismique selon l'une des revendications précédentes, caractérisé en ce que l'ensemble électronique d'acquisition, de mémorisation et de transmission comporte plusieurs modules électroniques (EA) interconnectés et reliés à des conducteurs du câble électro-porteur (3).

14. Système sismique suivant l'une des revendications 1 à 12, caractérisé en ce que l'élément allongé comporte au moins une section (T1) comprenant deux parties allongées remplies de liquide délimitées extérieurement par une paroi souple et renfermant chacune un groupe d'hydrophones à distance les uns des autres, les deux parties étant raccordées l'une à l'autre par une partie rigide contenant un module électronique d'acquisition (EA).

15. Système sismique selon la revendication 14, caractérisé en ce qu'il comporte plusieurs sections (T1, T2, T3) pourvues chacune d'un embout (28) et d'un manchon de raccordement (27) et adaptées à se raccorder les unes aux autres par emboitement, chacune d'elles étant traversée suivant sa longueur par une pluralité de lignes électriques (39, 43), et des moyens (37, 45) de connexion électrique pour le raccordement électrique des lignes des différentes sections les unes aux autres.

16. Système sismique selon la revendication 15, caractérisé en ce que chaque section d'une partie au moins des différentes sections de l'élément allongé est traversée par une canalisation hydraulique (24), les embouts (28) et les manchons (27) étant pourvus de moyens de fermeture escamotables (33, 34) pour mettre en communication automatiquement les canalisations hydrauliques (32, 34) respectives de sections adjacentes au moment de leur emboitement.

17. Système sismique selon l'une des revendications précédentes, caractérisé en ce qu'il comporte au moins un géophone multi-axes (21).

18. Système sismique selon l'une des revendications précédentes, caractérisé en ce que le système hydraulique comporte des moyens de compensation des variations de la pression régnant dans le puits.

19. Système sismique selon l'une des revendications précédentes, caractérisé en ce qu'il comporte un capteur associé à un module électronique pour la détection d'anomalies dans la progression de l'élément allongé le long du puits.

20. Système sismique selon l'une des revendications 5 à 19, caractérisé en ce qu'il comporte plusieurs unités électroniques (7, 22) adressables réparties le long de l'élément allongé (1) incluant chacun un module de veille, au moins une première voie de communication pour la connexion permanente des modules de veille à ladite station de commande et d'enregistrement et au moins une deuxième voie de communication pour la connexion sélective desdites unités à ladite station (5) en surface.

21. Système sismique selon l'une des revendications précédentes, caractérisé en ce qu'il comporte au moins une section contenant des moyens d'émission de signaux acoustiques ou sismiques.

## Patentansprüche

1. Bewegliches seismisches System für ein Bohrloch in Kombination umfassend: ein längliches Element (1), das über wenigstens einen Teil seiner Länge durch eine für akustische Wellen transparente Wandung (6) begrenzt ist, wobei dieser Teil mit Flüssigkeit gefüllt ist, Verankerungsmittel des länglichen Elements im Bohrloch, wenigstens ein Geophon (21), das im länglichen Element derart angeordnet ist, daß es mit den das Bohrloch umgebenden Formationen durch Wirkung auf diese Verankerungsmittel gekoppelt werden kann, wenigstens ein Hydrophon (H), das in jedem dieser Teile des länglichen Elementes angeordnet ist, welches mit einer für akustische Wellen transparenten Wandung versehen ist, ein Elektroträgerkabel (3), um das längliche Element mit einer Steuer- und Aufzeichnungsstation (5) an der Oberfläche zu verbinden, Antriebsmittel (14, 15, 26) zur Betätigung der beweglichen Verankerungsmittel sowie eine elektronische Anordnung (7, 22, 39, 43) für die Erfassung, Speicherung und übertragung der für jedes Hydrophon und jedes Geophon des länglichen Elementes empfangenen Signale, zur Regelung der Antriebsmittel und zur Verwaltung der Verbindungen mit dieser Steuer- und Aufzeichnungsstation (5) an der Oberfläche.

2. Seismisches System nach Anspruch 1, dadurch gekennzeichnet, daß das längliche Element Verankerungsmittel (13) umfaßt, die an unterschiedlichen Orten längs des länglichen Elements (1) angeordnet sind.

3. Seismisches System nach Anspruch 1 oder 2, dadurch gekennzeichnet, daß das längliche Element wenigstens einen steifen die Verankerungsmittel enthaltenden Teil (12) umfaßt.

4. Seismisches System nach Anspruch 1 oder 2 oder 3, dadurch gekennzeichnet, daß die Verankerungsmittel mehrere einklappbare Verankerungselemente (13) sowie gemeinsame Antriebsmittel (24, 26) umfassen, um die Verankerungselemente zu bewegen bzw. zu verschieben.

5. Seismisches System nach Anspruch 1 oder 2 oder 3, dadurch gekennzeichnet, daß die Verankerungsmittel mehrere versenkbare Verankerungselemente (13) sowie Antriebsmittel umfassen, die mehrere unterschiedliche Einheiten (15) zur Bewegung oder Verschiebung der Verankerungselemente umfassen.

6. Seismisches System nach einem der vorhergehenden Ansprüche, dadurch gekennzeichnet, daß das längliche Element wenigstens zwei stirnseitig miteinander verbundene Abschnitte (T1, T2) umfaßt.

7. Empfangssystem nach einem der Ansprüche 1 bis 5, dadurch gekennzeichnet, daß das längliche Element wenigstens zwei unterschiedliche Teile (T1, T2, T3) umfaßt, die miteinander über Verbindungsmittel (Ll, L2) verbunden sind.

8. Seismisches System nach dem vorhergehenden Anspruch, dadurch gekennzeichnet, daß die Verbindungsmittel (L1) elektrische Leiter umfassen.

9. Seismisches System nach Anspruch 7 oder 8, dadurch gekennzeichnet, daß die Verbindungsmittel (L2) wenigstens eine hydraulische Leitung umfassen.

10. Seismisches System nach Anspruch 4 oder 5, dadurch gekennzeichnet, daß die Antriebsmittel wenigstens eine einem Elektromotor (16) zugeordnete hydraulische Anordnung (18, 19) sowie elektrische Leiter umfassen, um den Elektromotor mit dem Elektroträgerkabel (3) zu verbinden.

11. Seismisches System nach dem vorhergehenden Anspruch, dadurch gekennzeichnet, daß diese hydraulische Anordnung in einem Abschnitt (T4) gegen das Ende des länglichen Elementes dem Kabel gegenüber angeordnet ist, derart, daß das Empfangssystem belastet wird.

12. Seismisches System nach einem der vorhergehenden Ansprüche, dadurch gekennzeichnet, daß jeder Teil des länglichen Elements (1), der mit einer für akustische Wellen durchlässigen Wandung versehen ist, außen durch eine nachgiebige Hülle (6) begrenzt ist.

13. Seismisches System nach einem der vorhergehenden Ansprüche, dadurch gekennzeichnet, daß die elektronische Anordnung zur Erfassung, Verwaltung und übertragung mehrere elektronische Module (EA) umfaßt, die miteinander verbunden und mit Leitern des Elektroträgerkabels (3) verbunden sind.

14. Seismisches System nach einem der Ansprüche 1 bis 12, dadurch gekennzeichnet, daß das längliche Element wenigstens einen Abschnitt (T1) umfaßt, der zwei längliche flüssigkeitsgefüllte Teile umfaßt, die außen durch eine nachgiebige Wand begrenzt sind und je eine Gruppe von unter Abstand zueinander befindlichen Hydrophonen umfaßt, wobei die beiden Teile miteinander über einen steifen Teil verbunden sind, der einen elektronischen Erfassungsmodul (EA) enthält.

15. Seismisches System nach Anspruch 14, dadurch gekennzeichnet, daß es mehrere Abschnitte (T1, T2, T3), die je mit einem Einsteckende (28) und einer Verbindungsmuffe (27) versehen sind, die so ausgebildet sind, daß sie miteinander durch Einstecken verbindbar sind, wobei jede hiervon entsprechend ihrer Länge durch eine Vielzahl elektrischer Leitungen (39, 43) durchsetzt ist und elektrische Verbindungsmittel (37, 45) für den elektrischen Anschluß der Leitungen der verschiedenen Abschnitte aneinander umfaßt.

16. Seismisches System nach Anspruch 15, dadurch gekennzeichnet, daß jeder Abschnitt wenigstens eines Teils der unterschiedlichen Abschnitte des länglichen Elements durchsetzt ist von einer hydraulischen Leitung (24), wobei die Einsteckenden (28) und die Muffen (27) mit einklappbaren Schließmitteln (33, 34) versehen sind, um automatisch die hydraulischen jeweiligen Leitungen (32, 34) benachbarter Abschnitte im Augenblick ihres Einsteckens in Verbindung zu setzen.

17. Seismisches System nach einem der vorhergehenden Ansprüche, dadurch gekennzeichnet, daß es wenigstens ein mehrachsiges Geophon (21) umfaßt.

18. Seismisches System nach einem der vorhergehenden Ansprüche, dadurch gekennzeichnet, daß das hydraulische System Mittel zur Kompensation der Veränderungen des im Bohrloch herrschenden Drucks umfaßt.

19. Seismisches System nach einem der vorhergehenden Ansprüche, dadurch gekennzeichnet, daß es einen Aufnehmer umfaßt, der einem elektronischen Modul zur Erfassung von Anomalien im Fortschritt des länglichen Elements längs des Bohrlochs zugeordnet ist.

20. Seismisches System nach einem der Ansprüche 5 bis 19, dadurch gekennzeichnet, daß es mehrere adressierbare elektronische Einheiten (7, 22) umfaßt, die längs des länglichen Elements (1) angeordnet sind und je einen Wächtermodul, wenigstens einen ersten Verbindungsweg zur permanenten Verbindung der Wächtermodule mit dieser Steuer- und Aufzeichnungsstation und wenigstens einen zweiten Verbindungsweg für die selektive Verbindung dieser Einheiten mit dieser Station 5 an der Oberfläche einschließen.

21. Seismisches System nach einem der vorhergehenden Ansprüche, dadurch gekennzeichnet, daß es wenigstens einen Mittel für akustische oder seismische Signale enthaltenden Abschnitt umfaßt.

## Claims

1. Mobile seismic system for a well, having in combination an elongate element (1) delineated over at least a part of its length by a wall (6) transparent to acoustic waves, this part being filled with liquid, means for anchoring the elongate element in the well, at least one geophone (21) arranged in the elongate element so as to be coupled with the formations surrounding the well by operating the said anchoring means, at least one hydrophone (H) arranged in each of the said parts of the elongate element provided with a wall transparent to the acoustic waves, an electric cable (3) for linking the elongate element to a control and recording station (5) at the surface, motor means (14, 15, 26) to operate the mobile anchoring means and an electronic unit (7, 22, 39, 43) for acquiring, storing in memory and transmitting the signals received by each hydrophone and each geophone of the elongate element, controlling the motor means and handling communications with the said control and recording station (5) at the surface.

2. Seismic system as claimed in claim 1, characterised in that the elongate element has anchoring means (13) arranged at different locations along the length of the elongate element (1).

3. Seismic system as claimed in claim 1 or 2, characterised in that the elongate element has at least one rigid portion (12) containing the anchoring means.

4. Seismic system as claimed in claim 1 or 2 or 3, characterised in that the anchoring means have several retractable anchoring elements (13) and common motor means (24, 26) for displacing the anchoring elements.

5. Seismic system as claimed in claim 1 or 2 or 3, characterised in that the anchoring means have several retractable anchoring elements (13) and motor means having several separate units (15) for displacing the anchoring elements.

6. Seismic system as claimed in one of the preceding claims, characterised in that the elongate element has at least two sections (T1, T2) joined end to end.

7. Receiving system as claimed in one of claims 1 to 5, characterised in that the elongate element has at least two separate parts (T1, T2, T3) linked one to the other by linking means (L1, L2).

8. Seismic system as claimed in the preceding claim, characterised in that the linking means (L1) have electric conductors.

9. Seismic system as claimed in claim 7 or 8, characterised in that the linking means (L2) have at least one hydraulic passage.

10. Seismic system as claimed in claim 4 or 5, characterised in that the motor means have at least one hydraulic unit (18, 19) associated with an electric motor (16) and electric conductors to connect the electric motor to the electric cable (3).

11. Seismic system as claimed in the preceding claim, characterised in that the said hydraulic unit is placed in a section (T4) arranged towards the end of the elongate element opposite the said cable so as to ballast the receiving system.

12. Seismic system as claimed in one of the preceding claims, characterised in that each part of the elongate element (1) provided with a wall transparent to acoustic waves is delineated on the outside by a flexible sheath (6).

13. Seismic system as claimed in one of the preceding claims, characterised in that the electronic acquisition, management and transmission unit has several interconnected electronic modules (EA) linked to the conductors of the electric cable (3).

14. Seismic system as claimed in one of claims 1 to 12, characterised in that the elongate element has at least one section (T1) comprising two elongate portions filled with liquid and delineated on the outside by a flexible wall and each enclosing a group of hydrophones at a distance from one another, the two portions being connected to one another by a rigid part containing an electronic acquisition module (EA).

15. Seismic system as claimed in claim 14, characterised in that it has several sections (T1, T2, T3), each provided with an end-piece (28) and a connecting sleeve (27) and designed to connect with one another by push-fitting, each of which has passing through its length a plurality of electric passages (39, 43) and electrical connecting means (37, 45) to link the passages of the different sections with one another electrically.

16. Seismic system as claimed in claim 15, characterised in that each section of at least one part of the different sections of the elongate element has passing through it a hydraulic passage (24), the end-pieces (28) and the sleeves (27) being provided with retractable closing means (33, 34) for placing the respective hydraulic passages (32, 34) of adjacent sections automatically in communication as they are fitted together.

17. Seismic system as claimed in one of the preceding claims, characterised in that it has at least one multiaxis geophone (21).

18. Seismic system as claimed in one of the preceding claims, characterised in that the hydraulic system has means for compensating for the variations in the pressure prevailing in the well.

19. Seismic system as claimed in one of the preceding claims, characterised in that it has a sensor associated with an electronic module for detecting any anomalies in the progression of the elongate element along the well.

20. Seismic system as claimed in one of claims 5 to 19, characterised in that it has several addressable electronic units (7, 22) distributed along the length of the elongate element (1) each incorporating a monitoring module, at least a first communication channel for permanently connecting the monitoring modules to the said control and recording station and at least a second communication channel for selectively connecting the said units to the said surface station (5).

21. Seismic system as claimed in one of the preceding claims, characterised in that it has at least one section containing means for emitting acoustic or seismic signals.
